# EUROPÄISCHE PATENTSCHRIFT

(11) **EP 2 357 080 B1**
(45) Veröffentlichungstag und Bekanntmachung des Hinweises auf die Patenterteilung: **24.05.2017**
(21) Anmeldenummer: 10190092.6
(22) Anmeldetag: 05.11.2010
(51) Int. Cl.: B32B 27/22, B32B 27/30, B32B 27/12, B60R 13/02, C08K 5/1515, D06N 3/06

(54) **Mehrschichtiges Flächengebilde**
Multi-layer textile sheet
Structures plates multicouches

(30) Priorität: 29.01.2010 DE 102010000259
(43) Veröffentlichungstag der Anmeldung: 17.08.2011
(73) Patentinhaber: Benecke-Kaliko AG, 30419 Hannover (DE)
(72) Erfinder: Mielke, Dirk, 30966, Hemmingen (DE); Freudenmann, Roland, 30900, Wedemark (DE); Gelszinnus, Uwe, 31319, Sehnde (DE); Bühring, Jürgen, 30900, Wedemark (DE); Herdt, Olga, 30177 Hannoer (DE)
(74) Vertreter: Finger, Karsten

(56) Entgegenhaltungen:
- EP-B1- 1 294 799
- DD-A1- 130 491
- GB-A- 1 055 872
- UMAIR ABDUL: "Green materials take the driver's seat", CANADIAN PLASTICS, SOUTHAM PLASTICS GROUP, DON MILLS, CA, 1. März 2009 (2009-03-01), Seite 5, XP007918791, ISSN: 0008-4778

## Beschreibung

Die Erfindung betrifft ein mehrschichtiges Flächengebilde, aufweisend zumindest eine textile Trägerschicht und zumindest eine Schicht aus weichmacherhaltigem Polyvinylchlorid. Die Erfindung betrifft ferner ein Innenverkleidungsteil für ein Fahrzeug, welches aus dem mehrschichtigen Flächengebilde besteht.

Flächengebilde aus weichmacherhaltigem Polyvinylchlorid auf einer textilen Trägerschicht sind für die Innenverkleidung von Kraftfahrzeugen, für Möbel, Taschen oder ähnliches, hinlänglich bekannt und werden z. B. in Fahrzeugen als Überzug von Sitzen, Türeinsätzen, Konsolen (Armaturenbrettern) etc. verwendet. Man bezeichnet derartige Flächengebilde landläufig auch als Kunstleder. Sie werden z. B. in der DD 130491 A1 beschrieben. Die Flächengebilde besitzen üblicherweise einen mehrschichtigen Aufbau, sind oft unterschäumt und weisen auf ihrer Oberseite eine dreidimensional strukturierte, geprägte Oberfläche auf, nämlich eine so genannte Musterung oder Narbung in verschiedensten Formen und Ausführungen. Der mehrschichtige Aufbau besteht oft aus einer oberen ggf. lackierten Deck- oder Dekorschicht, die geprägt ist, ggf. einer geschäumten Zwischenschicht und einer textilen Trägerschicht, die z. B. über eine Kaschierklebstoffschicht mit den anderen Schichten verbunden ist.

Als Weichmacher in den Schichten aus Polyvinylchlorid (PVC) im Kunstleder werden vorwiegend Phthalate, wie Diisononylphthalat (DINP) oder Diisodecylphthalat (DIDP), Sebacate, wie Dioctylsebacat (DOS), Trimellitate, wie Tri-2-ethylhexyltrimellitat (TOTM), oder ähnliche, auf Erdöl basierende Verbindungen eingesetzt. Es ist auch z. B. aus der EP 1 294 799 B1 bekannt, als Weichmacher für PVC Fettsäureprodukte auf der Basis von Pflanzenölen zu verwenden.

Für die textile Trägerschicht können unterschiedliche Materialien eingesetzt werden, die in Form von Gestricken, Gewirken, Geweben oder Vliesen vorliegen können. Als Materialbasis dienen in der Regel Polyester, Baumwolle, Polyamid oder Mischgewebe/-gewirke/-gestricke daraus, wobei Polyester und Polyamid zu den Chemiefasern aus synthetischen Polymeren (Synthesefasern) zählen.

Zur Schonung von Umwelt und Ressourcen ist man bestrebt, den Anteil an Rohstoffen, die auf Erdöl basieren, wie Weichmacher auf Erdölbasis oder Synthesefasern, in Kunstleder zu reduzieren. Dabei sollen aber gleichzeitig die vom Kunstleder geforderten Eigenschaften, wie geringe Emissionswerte, einheitliche Struktur, Haptik, Flexibilität und Beständigkeit, nicht beeinträchtigt werden.

Mehrschichtige Flächengebilde mit Polyvinylchlorid, die einen hohen Anteil an Rohstoffen enthalten, die nicht auf Erdöl basieren, sind aus der GB 1 055 872 A und aus Umair Abdul: "Green materials take the driver's seat", Canadian Plastics, Southam Plastics Group, Don Mills, CA, 1. März 2009, S. 5 bekannt.

Der Erfindung liegt daher die Aufgabe zu Grunde, ein mehrschichtiges Flächengebilde bereit zu stellen, das. ökologisch vorteilhaft ist und gleichzeitig keine wesentlichen Nachteile im gewünschten Eigenschaftsprofil, insbesondere im Hinblick auf eine Anwendung im Automobilinnenbereich, aufweist. Das Emissions verhatten des Flächen gebildes soll verbessert werden.

Gelöst wird die Aufgabe erfindungsgemäß durch ein Flächengebilde mit den Merkmalen des Anspruchs 1.

Dadurch, dass in mehr als einer der Schichten auf Rohstoffe zurückgegriffen wird, die nicht auf Erdöl basieren, gelingt es, den Anteil an Ressourcen schonenden Substanzen im gesamten Flächengebilde deutlich zu erhöhen, ohne dass dabei Einbußen in den gewünschten Eigenschaften hingenommen werden müssen. Es lassen sich ökologische PVC-Kunstleder herstellen.

Bei den Schichten, die Rohstoffe enthalten, die nicht auf Erdöl basieren, kann es sich um eine oder mehrere weichmacherhaltige PVC-Schichten, um textile Trägerschichten oder andere Schichten handeln. Um einen Anteil von mehr als 50 Gew.-% an nicht-erdölbasierenden Rohstoffen im Gesamtprodukt zu erzielen, ist es besonders sinnvoll, wenn die mengenmäßig größte PVC-Schicht und die textile Trägerschicht diese Rohstoffe enthalten, da diese Schichten in der Regel das Hauptgewicht des Flächengebildes ausmachen und so der Materialaustauch durch ökologische Rohstoffe den größten Effekt bewirkt. Hinzu kommt, dass PVC seinen Chloranteil aus Meersalz erhält, so dass dieser Teil ebenfalls nicht auf Erdöl basiert.

Als nicht-erdölbasierende Rohstoffe für die PVC-Schichten können beispielsweise spezielle Weichmachertypen wie epoxidierte Pflanzenöle eingesetzt werden. Als Ausgangsmaterial für diese epoxidierten Öle können dabei Leinöl, Rapsöl, Sojabohnenöl, Distelöl, Tallöl, Tungöl oder Gemische dieser Öle dienen. Der Weichmacheranteil in den PVC-Schichten des Flächengebildes liegt in der Regel bei 45 bis 130 Gew.-Teile bezogen auf 100 Gewichtsteile PVC.

Gemäß der Erfindung ist der Weichmacher in der PVC-Schicht ein Gemisch aus zumindest einem epoxidierten Pflanzenöl und zumindest einem epoxidierten Fettsäureester. Der Fettsäureester ist dabei ein Produkt aus Fettsäure verestert mit einem Alkohol. Es hat sich gezeigt, dass durch die Kombination von epoxidiertem Pflanzenöl mit epoxidiertem Fettsäureester das Emissionsverhalten des Flächengebildes verbessert werden kann. Das Ausdunsten von flüchtigen Stoffen aus dem Flächengebilde (Fogging) wird reduziert. Auch einem Verspröden bzw. Verhärten des Flächengebildes bei Wärmelagerung wird durch die Kombination von epoxidiertem Pflanzenöl mit epoxidiertem Fettsäureester als Weichmacher verhindert.

Im Hinblick auf ein verringertes Fogging hat es sich als besonders vorteilhaft erwiesen, wenn der Anteil an epoxidiertem Fettsäureester im Weichmachergemisch mehr als 30 Gew.-% beträgt.

Wählt man eine Fettsäure mit zumindest 8 Kohlenstoffatomen und einen Alkohol mit zumindest 4, vorzugsweise zumindest 6, Kohlenstoffatomen als Basis für den epoxidierten Fettsäureester, gelingt es in vorteilhafterweise, die Werte des gravimetrischen Foggings nach DIN 75201 B auf Werte ≤ 3,0 mg, vorzugsweise ≤ 2,0 mg, zu reduzieren. Als epoxidierte Fettsäure können beispielsweise Alkylstearate wie Epoxyhexylstearat eingesetzt werden.

Um eine Migration und Emission des Weichmachers zu reduzieren, ist es von Vorteil, wenn die PVC-Schicht bzw. die PVC-Schichten durch Bestrahlung mit Elektronen zusätzlich vernetzt wird bzw. werden. Dabei kommt es zur zumindest teilweisen Anbindung des Weichmachers an das PVC. Die Dosis der Vernetzungsstrahlung sollte < 100 kGy, bevorzugt < 50 kGy, besonders bevorzugt < 30 kGy sein, um neben der Vernetzung nicht den Abbau einzelner Substanzen oder Polymere zu fördern.

Bei zusätzlicher Vernetzung der PVC-Schichten ist es zur Steigerung der Vernetzungsraten vorteilhaft, wenn Vernetzungshilfsmittel, wie Trimethylolpropantriacrylat (TMPTA) oder Trimethylolpropantrimethacrylat (TMPTMA), der PVC-Zusammensetzung in Mengen von 1 -20 Gew.-%, bevorzugt 1 - 10 Gew.-%, besonders bevorzugt 1 - 5 Gew.-%, zudosiert werden.

Um die Vernetzung mit dem Weichmacher zu erleichtern, hat es sich als vorteilhaft erwiesen, wenn der Weichmacher eine Verbindung enthält, die Doppelbindungen aufweist und über eine Vernetzungsreaktion an das PVC angebunden wird. Dies kann z. B. durch den Einsatz von partiell epoxidiertem Pflanzenöl oder partiell oxidiertem Fettsäureester geschehen. Auf diese Weise lassen sich Flächengebilde erhalten, deren PVC-Schichten einen Gelgehalt von über 20 %, vorzugsweise über 40 %, aufweisen, wobei der Gelgehalt ermittelt durch THF-Extraktion ein Maß für die Vernetzung ist.

Die in den Flächengebilden vorliegenden PVC-Schichten enthalten neben Weichmacher die üblichen Additive wie z. B. Stabilisatoren, Alterungsschutzmittel (z. B. Antioxidantien), Füllstoffe, Flammschutzmittel (z. B. Antimontrioxid), Treibmittel (z. B. Azodicarbonamid), Pigmente (z. B. Ruß, Titandioxid) und weitere Hilfssubstanzen (z. B. Viskositätshilfsmittel, Haftvermittler etc.).

Durch die Zugabe von Stabilisatoren und insbesondere weiteren Alterungsschutzmitteln, vorzugsweise Antioxidantien, gelingt es, die Versprödung bei einer Wärmelagerung bei 120 °C über eine Woche zu reduzieren oder zu verhindern. Als Antioxidantien können beispielsweise Phenolderivate, Phosphite, sterisch gehinderte Amine oder Gemische aus diesen verwendet werden.

Die textile Trägerschicht des Flächengebildes kann auf Natur- oder Chemiefasern basieren, die auch als Hybridfasern oder Mischgewebe, -gewirke oder -gestricke eingesetzt werden können. Um den Anteil an Rohstoffen, die nicht auf Erdöl basieren, zu erhöhen, enthält die textile Trägerschicht Fasern aus nachwachsenden Rohstoffen, wie z. B. Baumwollfasern, Bambusfasern, Brennnesselfasern oder Chemiefasern aus natürlichen Polymeren. Zu den Letzteren zählen Cupro-, Lyocell-, Modal-, Viskose-, Acetat- und Triacetatfasern.

Gemäß einer bevorzugten Ausbildung der Erfindung enthält die textile Trägerschicht Cellulosefasern. Dies sind Fasern aus natürlicher, regenerierter oder derivatisierter Cellulose. Cellulose ist das häufigste und bedeutendste Biopolymer der Natur und kann z. B. aus Baumwolle, Flachs oder Holz gewonnen werden. Cellulosefasern bieten im Gegensatz zu Naturfasern wie Baumwolle den Vorteil, dass sie durch die industrielle Fertigung eine konstante Fadendicke aufweisen. Die textile Trägerschicht ist dadurch frei von Dickstellen, die das Erscheinungsbild des Flächengebildes beeinträchtigen können.

Bei den Cellulosefasern in der textilen Trägerschicht kann es sich um Viskosefasern handeln, die aus Regeneratcellulose nach dem Viskoseverfahren hergestellt werden. Alternativ dazu kann es sich bei den Cellulosefasern um Lyocellfasern handeln, die als Cellulosefasern aus organischem Lösemittel gesponnen werden.

Für ein kostengünstiges erfindungsgemäßes Flächengebilde enthält die textile Trägerschicht vorzugsweise Baumwoll- und Polyesterfäden, bevorzugt in einem Mischungsverhältnis von 35:65.

Die textile Trägerschicht kann als Maschenware in Form von Gestricken oder Gewirken vorliegen. Es können aber auch Gewebe und Vliese eingesetzt werden. Um das für die Anwendung als Kunstleder gewünschte Eigenschaftsprofil zu erzielen, liegt die textile Trägerschicht vorteilhafterweise als Gestrick vor.

Soll das mehrschichtige Flächengebilde als Kunstleder für KFZ-Sitze eingesetzt werden, sollten die textilen Trägerschichten eine statische Dehnung gemäß DIN 53 360 in Längsrichtung von 10 bis 20 und in Querrichtung von 35 bis 60 % aufweisen. Die bleibende Dehnung gemäß DIN 53 360 sollte in Längsrichtung maximal 3 % und in Querrichtung maximal 4 % betragen. Als Höchstzugkraft gemäß DIN EN ISO 13934-1 sollten in Längs- und Querrichtung mindestens 250 N vorgesehen werden.

Eine weitere vorteilhafte Ausbildung besteht darin, dass das mehrschichtige Flächengebilde zumindest zwei Schichten aus weichmacherhaltigem Polyvinylchlorid aufweist, wobei zumindest eine von diesen Schichten eine innenliegende Schicht ist, die geschäumt ist. Damit kann eine "weiche" Griffigkeit der Folie erzielt werden, d. h. der Kunde erhält Flächengebilde, welche sich besonders angenehm und weich anfühlen.

Für ein optimales Produkt im Hinblick auf das gewünschte Eigenschaftsprofil des Flächengebildes, insbesondere eines Kunstleders, hat es sich als vorteilhaft erwiesen, wenn das mehrschichtige Flächengebilde folgenden Aufbau in der angegeben Reihenfolge aufweist:
- Lackschicht,
- Deckschicht aus weichmacherhaltigem Polyvinylchlorid,
- ggf. geschäumte Zwischenschicht aus weichmacherhaltigem Polyvinylchlorid,
- Kaschierklebstoffschicht, ggf. aus weichmacherhaltigem Polyvinylchlorid
- textile Trägerschicht.

Den einzelnen Schichten kommen dabei unterschiedliche Aufgaben zu. Durch die zumeist transparente Lackschicht erfolgt die Glanzgradeinstellung sowie die Einstellung von Oberflächeneigenschaften wie Abriebfestigkeit, Haptik, Kratz-, Wärme-, Licht-, und Medienbeständigkeit gegen Reiniger. Die Deckschicht aus weichmacherhaltigem Polyvinylchlorid wird zur Farbgebung genutzt und wirkt unterstützend in Bezug auf die Beständigkeit gegen Abrieb, Kratzer und Reinigungsmittel. Sie sollte wärme- und lichtbeständig sein. Die Zwischenschicht kann einen geschäumten oder kompakten Aufbau haben. Die Schaumschicht dient vor allem zur Optimierung einer Polsterung z. B. bei Sitzkunstleder, sowie zur Erreichung einer lederähnlichen Haptik. Die Zwischenschicht dient auch der Vermeidung des Durchdrückens der Textilstruktur beim rückseitigen Kaschieren des Verbunds auf ein Bauteil. Die textile Trägerschicht ist im Wesentlichen für die mechanischen Eigenschaften wie Dehnbarkeit, Zug- und Weiterreißfestigkeit des gesamten Flächengebildes verantwortlich und ist entsprechend anzuwählen.

Vorzugsweise ist das mehrschichtige Flächengebilde ein Kunstleder, welches sich durch einen hohen Anteil an nachwachsenden Rohstoffen auszeichnet.

Besonders vorteilhaft lässt sich das erfindungsgemäße Flächengebilde als Innenverkleidungsteil für ein Fahrzeug verwenden, insbesondere als Sitzbezug für einen Fahrzeugsitz, der üblicherweise durch Knickungen, Biegung und Dehnung stark strapaziert wird. Auch bei Fahrzeugen ist man stark bestrebt, den Anteil an auf Erdöl basierenden Rohstoffen zu reduzieren, da Umweltaspekte und Ressourcenschonung sowohl bei den Autoherstellern als auch bei den Autokäufern immer mehr an Bedeutung gewinnen.

Das erfindungsgemäße Flächengebilde kann mittels herkömmlicher Beschichtungsverfahren, vor allem Direkt- und Umkehrbeschichtungsverfahren, und anschließender Lackierung und Prägung hergestellt werden.

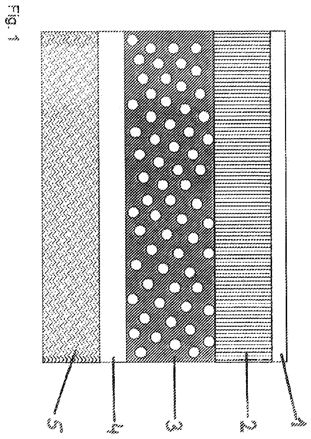

Anhand eines Ausführungsbeispieles soll die Erfindung näher erläutert werden. Es zeigt
- Fig. 1: den Aufbau einer erfindungsgemäßen Flächengebildes im Schnitt

Die Fig. 1 zeigt den Aufbau eines erfindungsgemäßen Flächengebildes für den Sitzbezug eines Fahrzeugsitzes im Schnitt. Unterhalb einer Lackschicht 1, die z. B. auf einer Polyurethan-Dispersion, also einem umweltfreundlichen Wasserlack basiert und eine Stärke von 5 bis 10 µm aufweist, ist eine Deckschicht 2 angeordnet, die auf Polyvinylchlorid basiert und Weichmacher, Stabilisatoren und weitere Additive enthält. Darauf folgt eine Zwischenschicht 3 aus geschäumtem Polyvinylchlorid mit Weichmacher, Stabilisatoren und weiteren Additiven. Auf die Zwischenschicht 3 ist von unten eine textile Trägerschicht 5 mittels eines Klebers 4 aus weichmacherhaltigem Polyvinylchlorid aufkaschiert ist. Die textile Trägerschicht 5 besteht aus bei diesem Ausführungsbeispiel aus einem Lyocellgestrick, welches ca. 10 bis 15 Gew.-% am Gesamtgewicht des Flächengebildes ausmacht.

In der folgenden Tabelle 1 sind die Beispiele für die Mischungszusammensetzungen für die Polyvinylchloridschichten 2, 3 und 4 mit möglichen Mengenbereichen sowie ein spezielles Beispiel für die geschäumte Schicht 3 angegeben. Die Schichten 2, 3 und 4 machen zusammen ca. 70 bis 80 Gew.-% des gesamten Flächengebildes aus.

**Tabelle 1**

| Zusammensetzung | Mengenbereiche [Gew.-Teile] | spez. Beispiel [Gew.-Teile] | Bemerkung |
|---|---|---|---|
| PVC | 100 | 100 | 56 % Meersalzanteil |
| Weichmacher^{a} | 45-130 | 100 | auf Basis nachwachsender Rohstoffe |
| Stabilisator | 0,5-8 | 2 | |
| Alterungsschutzmittel | 0-5 | 0,5 | |
| Pigmente | 0-20 | - | |
| Treibmittel^{b} | 0-15 | 5 | nur in geschäumten Schichten |
| Katalysator f. Treibmittel^{c} | 0-5 | 1 | nur in geschäumten Schichten |
| Flammschutzmittel^{d} | 0-25 | 7 | ggf. nur in einer Schicht |
| Weitere Addidive^{e} | 0-10 | ca. 0,1 | |

| | | | |
|---|---|---|---|
| ^{a} Gemisch aus epoxidiertem Sojabohnenöl und epoxidiertem Hexylstearat im Gewichtsverhältnis von 60:40 ^{b} Azodicarbonamid ^{c} ZnO ^{d} Antimontrioxid ^{e} Viskositätshilfsmittel, Haftvermittler, etc | | | |

Mit den in der Tabelle 1 angegebenen Mengen an Weichmacher aus epoxidiertem Sojabohnenöl und Epoxyhexylstearat und der textilen Trägerschicht aus Lyocell erhält man ein Flächengebilde, das mehr als 50 Gew.-% Rohstoffe aufweist, die nicht auf Erdöl basieren. Hinzu kommt, dass PVC seinen Chloranteil aus Meersalz erhält, so dass dieser Teil ebenfalls nicht auf Erdöl basiert. Somit wird ein Gesamtanteil an nicht auf Erdöl basierenden Rohstoffen in dem vorstehenden Beispiel von ca. 75 Gew.-% erreicht.

Das Flächengebilde mit der speziellen in Tabelle 1 angegebenen PVC-Rezepturen zeichnet sich außerdem durch ein gravimetrisches Fogging gemäß DIN 75201 B von weniger als 2,0 mg aus.

### Bezugszeichenliste

### (Teil der Beschreibung)

- 1: Lackschicht
- 2: Deckschicht aus Polyvinylchlorid
- 3: Zwischenschicht aus geschäumtem Polyvinylchlorid
- 4: Kaschierklebstoffschicht aus weichmacherhaltigem Polyvinylchlorid
- 5: textile Trägerschicht

## Patentansprüche

1. Mehrschichtiges Flächengebilde, aufweisend zumindest eine textile Trägerschicht (5) und zumindest eine Schicht (2, 3, 4) aus weichmacherhaltigem Polyvinylchlorid, wobei mehr als eine der Schichten Rohstoffe enthält, die nicht auf Erdöl basieren, wobei das gesamte Flächengebilde mehr als 50 Gew.-% Rohstoffe aufweist, die nicht auf Erdöl basieren, **dadurch gekennzeichnet, dass** der Weichmacher ein Gemisch aus zumindest einem epoxidierten Pflanzenöl und zumindest einem epoxidierten Fettsäureester (Fettsäure verestert mit einem Alkohol) ist.

2. Mehrschichtiges Flächengebilde nach Anspruch 1, **dadurch gekennzeichnet, dass** das Weichmachergemisch mehr als 30 Gew.-% zumindest eines epoxidierten Fettsäureesters enthält.

3. Mehrschichtiges Flächengebilde nach Anspruch 1 oder 2, **dadurch gekennzeichnet, dass** der epoxidierte Fettsäureester auf einer Fettsäure mit zumindest 8 Kohlenstoffatomen und einem Alkohol mit zumindest 4, vorzugsweise zumindest 6 Kohlenstoffatomen, basiert.

4. Mehrschichtiges Flächengebilde nach zumindest einem der Ansprüche 1 bis 3, **dadurch gekennzeichnet, dass** der Weichmacher eine Verbindung enthält, die Doppelbindungen aufweist und über eine Vernetzungsreaktion an das Polyvinylchlorid angebunden wird.

5. Mehrschichtiges Flächengebilde nach zumindest einem der Ansprüche 1 bis 4, **dadurch gekennzeichnet, dass** die Schichten aus PVC zumindest ein Antioxidans ausgewählt aus der Gruppe, bestehend aus Phenolderivaten, Phosphite und sterisch gehinderten Aminen, enthält.

6. Mehrschichtiges Flächengebilde nach zumindest einem der Ansprüche 1 bis 5, **dadurch gekennzeichnet, dass** die textile Trägerschicht (5) Fasern aus nachwachsenden Rohstoffen enthält.

7. Mehrschichtiges Flächengebilde nach Anspruch 6, **dadurch gekennzeichnet, dass** die textile Trägerschicht (5) Cellulosefasern, vorzugsweise Viskosefasern oder Lyocellfasern, enthält.

8. Mehrschichtiges Flächengebilde nach Anspruch 6, **dadurch gekennzeichnet, dass** die textile Trägerschicht (5) Baumwoll- und Polyesterfasern enthält.

9. Mehrschichtiges Flächengebilde nach zumindest einem der Ansprüche 1 bis 8, **dadurch gekennzeichnet, dass** die textile Trägerschicht (5) als Gestrick vorliegt.

10. Mehrschichtiges Flächengebilde nach zumindest einem der Ansprüche 1 bis 9, **dadurch gekennzeichnet, dass** es zumindest zwei Schichten (2, 3, 4) aus weichmacherhaltigem Polyvinylchlorid aufweist, wobei zumindest eine von diesen Schichten (2, 3, 4) eine innenliegende Schicht (3) ist, die geschäumt ist.

11. Mehrschichtiges Flächengebilde nach zumindest einem der Ansprüche 1 bis 10, **dadurch gekennzeichnet, dass** es folgenden Aufbau in der angegebenen Reihenfolge aufweist:
- Lackschicht (1),
- Deckschicht (2) aus weichmacherhaltigem Polyvinylchlorid,
- ggf. geschäumte Zwischenschicht (3) aus weichmacherhaltigem Polyvinylchlorid,
- Kaschierklebstoffschicht (4) ggf. aus weichmacherhaltigem Polyvinylchlorid,
- textile Trägerschicht (5).

12. Mehrschichtiges Flächengebilde nach zumindest einem der Ansprüche 1 bis 12, **dadurch gekennzeichnet, dass** es ein Kunstleder ist.

13. Innenverkleidungsteil für ein Fahrzeug, insbesondere Sitzbezug für einen Fahrzeugsitz, bestehend aus einem mehrschichtigen Flächengebilde nach einem der Ansprüche 1 bis 12.

## Claims

1. Multilayer sheet-like structure, comprising at least one textile backing layer (5) and at least one layer (2, 3, 4) made of plasticized polyvinyl chloride, where more than one of the layers comprises raw materials not based on petroleum, where the entire sheet-like structure comprises more than 50% by weight of raw materials not based on petroleum, **characterized in that** the plasticizer is a mixture of at least one epoxidized vegetable oil and of at least one epoxidized fatty acid ester (fatty acid esterified with an alcohol).

2. Multilayer sheet-like structure according to Claim 1, **characterized in that** the plasticizer mixture comprises more than 30% by weight of at least one epoxidized fatty acid ester.

3. Multilayer sheet-like structure according to Claim 1 or 2, **characterized in that** the epoxidized fatty acid ester is based on a fatty acid having at least 8 carbon atoms and on an alcohol having at least 4 carbon atoms, preferably at least 6.

4. Multilayer sheet-like structure according to at least one of Claims 1 to 3, **characterized in that** the plasticizer comprises a compound which has double bonds and which becomes linked to the polyvinyl chloride by way of a crosslinking reaction.

5. Multilayer sheet-like structure according to at least one of Claims 1 to 4, **characterized in that** the layers made of PVC comprise at least one antioxidant selected from the group consisting of phenol derivatives, phosphites and sterically hindered amines.

6. Multilayer sheet-like structure according to at least one of Claims 1 to 5, **characterized in that** the textile backing layer (5) comprises fibres made of renewable raw materials.

7. Multilayer sheet-like structure according to Claim 6, **characterized in that** the textile backing layer (5) comprises cellulose fibres, preferably viscose fibres or Lyocell fibres.

8. Multilayer sheet-like structure according to Claim 6, **characterized in that** the textile backing layer (5) comprises cotton fibres and polyester fibres.

9. Multilayer sheet-like structure according to at least one of Claims 1 to 8, **characterized in that** the textile backing layer (5) takes the form of drawn-loop knitted fabric.

10. Multilayer sheet-like structure according to at least one of Claims 1 to 9, **characterized in that** it comprises at least two layers (2, 3, 4) made of plasticized polyvinyl chloride, where at least one of these layers (2, 3, 4) is a foamed internally situated layer (3).

11. Multilayer sheet-like structure according to at least one of Claims 1 to 10, **characterized in that** it has the following structure in the sequence stated:
- lacquer layer (1),
- outer layer (2) made of plasticized polyvinyl chloride,
- optionally foamed intermediate layer (3) made of plasticized polyvinyl chloride,
- lamination adhesive layer (4) optionally made of plasticized polyvinyl chloride,
- textile backing layer (5).

12. Multilayer sheet-like structure according to at least one of Claims 1 to 12, **characterized in that** it is a synthetic leather.

13. Interior cladding component for a vehicle, in particular seat covering for a vehicle seat, composed of a multilayer sheet-like structure according to any of Claims 1 to 12.

## Revendications

1. Structure plate multicouche, comprenant au moins une couche de support textile (5) et au moins une couche (2, 3, 4) à base de poly(chlorure de vinyle) contenant un plastifiant, plus d'une des couches contenant des matières premières qui ne sont pas à base de pétrole, la structure plate dans son ensemble comportant plus de 50 % en poids de matières premières qui ne sont pas à base de pétrole, **caractérisée en ce que** le plastifiant est un mélange d'au moins une huile végétale époxydée et d'au moins un ester d'acide gras (acide gras estérifié par un alcool) époxydé.

2. Structure plate multicouche selon la revendication 1, **caractérisée en ce que** le mélange plastifiant contient plus de 30 % en poids d'au moins un ester d'acide gras époxydé.

3. Structure plate multicouche selon la revendication 1 ou 2, **caractérisée en ce que** l'ester d'acide gras époxydé est à base d'un acide gras ayant au moins 8 atomes de carbone et d'un alcool ayant au moins 4, de préférence au moins 6 atomes de carbone.

4. Structure plate multicouche selon au moins l'une quelconque des revendications 1 à 3, **caractérisée en ce que** le plastifiant contient un composé qui comporte des doubles liaisons et est attaché par une réaction de réticulation au poly(chlorure de vinyle).

5. Structure plate multicouche selon au moins l'une quelconque des revendications 1 à 4, **caractérisée en ce que** les couches de PVC contiennent au moins un antioxydant choisi dans le groupe constitué par des dérivés de phénol, des phosphites et des amines à empêchement stérique.

6. Structure plate multicouche selon au moins l'une quelconque des revendications 1 à 5, **caractérisée en ce que** la couche de support textile (5) contient des fibres à bases de matières premières renouvelables.

7. Structure plate multicouche selon la revendication 6, **caractérisée en ce que** la couche de support textile (5) contient des fibres de cellulose, de préférence des fibres de viscose ou des fibres de Lyocell.

8. Structure plate multicouche selon la revendication 6, **caractérisée en ce que** la couche de support textile (5) contient des fibres de coton et de polyester.

9. Structure plate multicouche selon au moins l'une quelconque des revendications 1 à 8, **caractérisée en ce que** la couche de support textile (5) est présente sous forme de tricot.

10. Structure plate multicouche selon au moins l'une quelconque des revendications 1 à 9, **caractérisée en ce qu'**elle comporte au moins deux couches (2, 3, 4) à base de poly(chlorure de vinyle) contenant un plastifiant, au moins une de ces couches (2, 3, 4) étant une couche interne (3) qui est expansée.

11. Structure plate multicouche selon au moins l'une quelconque des revendications 1 à 10, **caractérisée en ce qu'**elle présente la structure suivante dans l'ordre suivant :
- couche de vernis (1),
- couche de recouvrement (2) à base de poly(chlorure de vinyle) contenant un plastifiant,
- couche intermédiaire éventuellement expansée (3) à base de poly(chlorure de vinyle) contenant un plastifiant,
- couche d'adhésif de contrecollage (4) éventuellement à base de poly(chlorure de vinyle) contenant un plastifiant,
- couche de support textile (5).

12. Structure plate multicouche selon au moins l'une quelconque des revendications 1 à 12, **caractérisée en ce qu'**il s'agit d'un cuir artificiel.

13. Pièce d'habillage intérieur pour un véhicule, en particulier revêtement de siège pour un siège de véhicule, consistant en une structure plate multicouche selon l'une quelconque des revendications 1 à 12.
